# EUROPÄISCHE PATENTANMELDUNG

(11) **EP 3 095 924 A1**
(43) Veröffentlichungstag der Anmeldung: **23.11.2016**
(21) Anmeldenummer: 16169906.1
(22) Anmeldetag: 17.05.2016
(51) Int. Cl.: E03F 5/14, E02B 8/02

(54) **VORRICHTUNG ZUM ABSCHEIDEN UND ENTFERNEN VON SIEBGUT AUS EINER MIT SIEBGUT VERUNREINIGTEN STRÖMENDEN FLÜSSIGKEIT**

(30) Priorität: 20.05.2015 DE 102015108006
(71) Anmelder: Huber SE, 92334 Berching (DE)
(72) Erfinder: Spenger, Franz, 91187 Röttenbach (DE); Brüderl, Christian, 85132 Schernfeld (DE); Breinl, Christian, 92334 Berching (DE)
(74) Vertreter: Baudler, Ron

(57) **Zusammenfassung**

Die Erfindung betrifft eine Vorrichtung zum Abscheiden und Entfernen von Siebgut (1) aus einer mit Siebgut (1) verunreinigten strömenden Flüssigkeit, beispielsweise Abwasser (2), wobei die Vorrichtung einen an einem Gestell (3) fixierten und eine Siebfläche bildenden Siebrost (4) aufweist, wobei der Siebrost (4) mehrere nebeneinander angeordnete und durch Zwischenräume (14) zumindest abschnittsweise voneinander beabstandete Roststäbe (5) aufweist, wobei der Siebrost (4) eine im Betrieb der Vorrichtung von der strömenden Flüssigkeit angeströmte Vorderseite (13) aufweist, wobei die Vorrichtung zumindest eine Reinigungsharke (6) mit einer Vielzahl von Reinigungszinken (7) umfasst, wobei die Reinigungsharke (6) mit Hilfe eines Antriebs (8) derart entlang der Vorderseite (13) des Siebrosts (4) bewegbar ist, dass die Reinigungszinken (7) beim Passieren des Siebrosts (4) zumindest abschnittsweise in die genannten Zwischenräume (14) eingreifen, um vom Siebrost (4) zurückgehaltenes Siebgut (1) von diesem zu entfernen und in Richtung eines Austrags (9) der Vorrichtung zu fördern. Erfindungsgemäß wird vorgeschlagen, dass die Reinigungsharke (6) Reinigungszinken (7) aufweist, die unterschiedlich tief in die genannten Zwischenräume (14) des Siebrosts (4) eingreifen.

## Beschreibung

Die vorliegende Erfindung betrifft eine Vorrichtung zum Abscheiden und Entfernen von Siebgut aus einer mit Siebgut verunreinigten strömenden Flüssigkeit, beispielsweise Abwasser, wobei die Vorrichtung einen an einem Gestell fixierten und eine Siebfläche bildenden Siebrost aufweist, wobei der Siebrost mehrere nebeneinander angeordnete und durch Zwischenräume zumindest abschnittsweise voneinander beabstandete Roststäbe aufweist, wobei der Siebrost eine im Betrieb der Vorrichtung von der strömenden Flüssigkeit angeströmte Vorderseite aufweist, wobei die Vorrichtung zumindest eine Reinigungsharke mit einer Vielzahl von Reinigungszinken umfasst, wobei die Reinigungsharke mit Hilfe eines Antriebs derart entlang der Vorderseite des Siebrosts bewegbar ist, dass die Reinigungszinken beim Passieren des Siebrosts zumindest abschnittsweise in die genannten Zwischenräume eingreifen, um vom Siebrost zurückgehaltenes Siebgut von diesem zu entfernen und in Richtung eines Austrags der Vorrichtung zu fördern.

Derartige Siebvorrichtungen sind im Stand der Technik hinlänglich bekannt und dienen beispielsweise der Entfernung von grobem Siebgut (Holz, Steine, etc.) aus einem in einem Abwasserkanal fließenden Abwasser. Die Siebvorrichtung wird hierzu in der Regel derart in den Abwasserkanal integriert, dass sich die Siebfläche, ausgehend von der Kanalsohle, senkrecht oder leicht geneigt nach oben erstreckt. Um einen Austrag des von dem die Siebfläche bildenden Siebrost zurückgehaltenen Siebguts zu ermöglichen, erstreckt sich die Siebfläche meist über den maximal zu erwartenden Wasserspiegel.

Durch einen Umlaufbetrieb der Reinigungsharke (von der auch mehrere vorhanden sein können) wird schließlich das Siebgut entlang der Vorderseite der Siebfläche nach oben in Richtung eines Austrags gefördert und dort, beispielsweise mit Hilfe eines Abstreifers, von der Reinigungsharke entfernt.

Eine gattungsgemäße Siebvorrichtung ist beispielsweise im Zusammenhang mit Figur 1 der DE 10 2012 103 058 A1 beschrieben.

Muss die einzelne Reinigungsharke nun in dem Siebrost verklemmtes Siebgut beseitigen, so wirkt auf diese eine relativ große Kraft, die mit der Anzahl der Reinigungszinken und der zu entfernenden Siebgutmengen zunimmt und die entweder zu einer Beschädigung der Reinigungsharke oder einer Überlastung des die Reinigungsharke antreibenden Antriebs führen kann.

Aufgabe der vorliegenden Erfindung ist es daher, eine entsprechende Vorrichtung vorzuschlagen, die sich diesbezüglich in positiver Weise vom bekannten Stand der Technik unterscheidet.

Diese Aufgabe wird gelöst durch eine Vorrichtung mit den Merkmalen von Anspruch 1.

Erfindungsgemäß zeichnet sich die Vorrichtung nun dadurch aus, dass die Reinigungsharke Reinigungszinken aufweist, die unterschiedlich tief in die genannten Zwischenräume des Siebrosts eingreifen. Mit anderen Worten weist die Reinigungsharke also eine erste Art von Reinigungszinken auf, die sich weiter zwischen die ihnen zugeordneten Roststäbe erstreckt als eine zweite Art von Reinigungszinken (selbstverständlich kann auch eine dritte, vierte, etc. Art von Reinigungszinken vorhanden sein, deren Eingriffstiefe von den Eingriffstiefen der übrigen Arten von Reinigungszinken abweicht). Während also ein Teil der Reinigungszinken die ihnen zugeordneten Zwischenräume vollständig von Siebgut befreit, da die entsprechenden Reinigungszinken relativ weit in die Zwischenräume eingreifen, durchkämmen die restlichen Reinigungszinken die ihnen zugeordneten Zwischenräume von der Vorderseite des Siebrost aus gesehen nur bis zu einer gewissen Tiefe (= "Eingriffstiefe"). Befindet sich nun Siebgut in einer bestimmten Tiefe des Siebrosts, so wird dieses nur von den tiefer in die Zwischenräume eingreifenden Reinigungszinken erfasst, so dass die Gesamtbelastung auf die Reinigungsharke geringer ausfällt, als in dem Fall, in dem stets alle Reinigungszinken vollständig in die Zwischenräume eingreifen, wie dies im Stand der Technik bekannt ist. Beispielsweise wäre es denkbar, dass die Reinigungszinken einer Reinigungsharke zwei unterschiedliche Eingriffstiefen aufweisen, wobei sich die Reinigungszinken mit großer Eingriffstiefe mit den Reinigungszinken mit weniger großer Eingriffstiefe abwechseln.

An dieser Stelle sei zudem darauf hingewiesen, dass stets alle Reinigungszinken jeder Reinigungsharke in die Zwischenräume des Siebrosts eingreifen sollten, wobei die Eingriffstiefe der einzelnen Reinigungszinken auf die erfindungsgemäße Art und Weise variiert.

Insbesondere ist es äußert vorteilhaft, wenn die Vorrichtung wenigstens zwei Reinigungsharken aufweist, die den Siebrost beim Betrieb der Vorrichtung nacheinander, d. h. in einer Bewegungsrichtung der Reinigungsharken gesehen, passieren. In diesem Zusammenhang ist es von Vorteil, wenn die Reinigungsharken jeweils Reinigungszinken mit größerer und kleinerer Eingriffstiefe aufweisen, wobei die Reinigungszinken der ersten Reinigungsharke derart zu den Reinigungszinken der zweiten Reinigungsharke versetzt angeordnet sind, dass die einzelnen Zwischenräume nacheinander sowohl von Reinigungszinken mit größerer als auch von Reinigungszinken mit kleinerer Eingriffstiefe durchkämmt werden. In diesem Fall werden die einzelnen Zwischenräume teilweise nacheinander bzw. schrittweise gereinigt, indem die Reinigungszinken mit der größeren Eingriffstiefe einer Reinigungsharke das Siebgut aus dem Siebrost entfernen, das von den Reinigungszinken mit kleinerer Eingriffstiefe der vorangehenden Reinigungsharke nicht erfasst werden konnte.

Ebenso ist es vorteilhaft, wenn zumindest ein Teil der Reinigungszinken (vorzugsweise alle) in die Zwischenräume eingreift (bzw. eingreifen), ohne hierbei den Siebrost vollständig zu durchgreifen. Während also der Siebrost eine in Strömungsrichtung der Flüssigkeit gesehene Tiefe X mm aufweist, ist es sinnvoll, wenn zumindest die Reinigungszinken mit geringerer Eingriffstiefe, vorzugsweise sämtliche Reinigungszinken, eine Eingriffstiefe von (X-Y) mm aufweisen. Somit können die Roststäbe eine relativ große Tiefe und damit auch Steifigkeit aufweisen (die Roststäbe können mehrere Meter lang sein), wohingegen die Reinigungszinken eine relativ kurze Länge besitzen, so dass ein Verbiegen bzw. Brechen der Reinigungszinken nahezu ausgeschlossen ist.

Vorteile bringt es zudem mit sich, wenn die Roststäbe im Bereich der Vorderseite des Siebrosts (zumindest abschnittsweise) in einer gemeinsamen Ebene enden. Die Roststäbe weisen also jeweils einen bezogen auf die strömende Flüssigkeit stromaufwärts weisenden Endbereich auf, der als erstes mit dem anströmenden Siebgut in Kontakt kommt, wobei die Endbereiche aller Roststäbe vorzugsweise zumindest über einen gewissen Bereich in einer gemeinsamen Ebene liegen. Mit anderen Worten ragt also vorzugsweise kein Roststab aus der Siebfläche des Siebrosts heraus.

Besonders vorteilhaft ist es, wenn die Reinigungsharke eine erste Art von Reinigungszinken und wenigstens eine zweite Art von Reinigungszinken aufweist, wobei gleichartige Reinigungszinken gleich tief in die ihnen zugeordneten Zwischenräume eingreifen. Während sich auch die Form der Reinigungszinken der einzelnen Reinigungszinken-Arten unterscheiden kann, weisen sie insbesondere eine unterschiedliche Eingriffstiefe und insbesondere auch eine unterschiedliche Länge auf (wobei die Länge eines Reinigungszinkens im Rahmen der Erfindung als die räumliche Erstreckung des Reinigungszinkens in Richtung des Siebrosts definiert ist). In jedem Fall ist es von Vorteil, wenn sich Reinigungszinken mit größerer Eingriffstiefe mit Reinigungszinken mit kleinerer Eingriffstiefe abwechseln.

Generell ist es von Vorteil, wenn zueinander benachbarte Reinigungszinken jeweils unterschiedlich tief in die ihnen zugeordneten Zwischenräume eingreifen und/oder eine unterschiedliche Länge aufweisen. Mit anderen Worten sollten direkt zueinander benachbarte Reinigungszinken nicht dieselbe Länge und/oder Eingriffstiefe aufweisen, wobei auch drei oder mehr Reinigungszinken-Arten mit unterschiedlicher Länge und/oder Eingriffstiefe vorhanden sein können. Vorzugsweise sind die Abstände zwischen benachbarten Reinigungszinken zudem stets konstant.

Besondere Vorteile bringt es mit sich, wenn ein erster Teil der Reinigungszinken eine Länge aufweist, deren Betrag wenigstens dem 1,2-fachen, bevorzugt wenigstens dem 1,5-fachen, besonders bevorzugt wenigstens dem 2-fachen, Betrag der Länge eines weiteren Teils der Reinigungszinken entspricht. Die längeren Reinigungszinken sollten also möglichst eine signifikant größere Länge aufweisen als die kürzeren Reinigungszinken, so dass Siebgut, das von den kürzeren Reinigungszinken nicht erreicht wird, von den längeren Reinigungszinken einer nachfolgenden Reinigungsharke aus dem Siebrost entfernt werden kann.

Vorteilhaft ist es jedoch ebenso, wenn ein erster Teil der Reinigungszinken eine Länge aufweist, deren Betrag maximal dem 3-fachen, bevorzugt maximal dem 4-fachen, besonders bevorzugt maximal dem 5-fachen, Betrag der Länge eines weiteren Teils der Reinigungszinken entspricht. Würde der genannte Wert überschritten, so hätte dies zur Folge, dass nahezu das gesamte Siebgut von den längeren Reinigungszinken entfernt werden müsste bzw. dass die längeren Reinigungszinken so lang wären, dass ein Verbiegen derselben zu befürchten wäre.

Auch ist es äußert vorteilhaft, wenn die Roststäbe im Bereich der genannten Vorderseite des Siebrosts Verbreiterungen aufweisen, die die lichte Breite der jeweiligen Zwischenräume begrenzen. Beispielsweise könnten die Roststäbe in einem senkrecht zu ihrer Längserstreckung verlaufenden Querschnitt im Bereich ihrer die Vorderseite des Siebrosts bildenden Abschnitte linsen- bzw. ovalförmig ausgebildet sein. Die genannten Abschnitte gehen schließlich in einen schmäleren Abschnitt über, so dass der Abstand zwischen den Verbreiterungen benachbarter Roststäbe das Rückhaltevermögen des Siebrosts bestimmt. Vorzugsweise erstreckt sich nun nur ein Teil der Reinigungszinken (vorzugsweise jeder zweite) bis in den Bereich, in dem der Betrag der durch die Verbreiterungen begrenzten lichten Breite der jeweiligen Zwischenräume (d. h. der parallel zur Siebfläche verlaufende Abstand zwischen benachbarten Verbreiterungen) minimal ist. Im Ergebnis ist es von Vorteil, wenn die dickste Stelle der Verbreiterungen beim Betrieb der Vorrichtung immer nur auf einer von zwei Seiten von einem Reinigungszinken einer Reinigungsharke passiert wird.

Vorteilhaft ist es also, wenn sich nur jeder zweite Reinigungszinken bis in den Bereich erstreckt, in dem der Betrag der durch die Verbreiterungen begrenzten lichten Breite der jeweiligen Zwischenräume minimal ist, da sich hier das von dem Siebrost zurückgehaltene Siebgut am ehesten verklemmt, so dass die auf eine Reinigungsharke einwirkende Kraft verringert werden kann, wenn nicht alle Reinigungszinken mit dem verklemmten Siebgut in Kontakt kommen.

Vorteile bringt es zudem mit sich, wenn die Reinigungszinken und die Roststäbe zumindest abschnittsweise in seitlicher Richtung relativ zueinander bewegbar sind. Dies kann entweder dadurch erreicht werden, dass die Reinigungszinken in seitlicher Richtung (bezogen auf die Bewegungsrichtung der Reinigungsharke während des Betriebs der Vorrichtung) geringfügig biegbar sind. Insbesondere können die Reinigungszinken zumindest abschnittsweise aus einem Kunststoff gefertigt sein.

Ebenso wäre es auch möglich, dass die Reinigungszinken der Reinigungsharke derart gelagert sind, dass sie bezogen auf die genannte Bewegungsrichtung und mit Blick auf den Siebrost seitlich hin und her bewegbar sind.

Mit anderen Worten kann es also von Vorteil sein, wenn zumindest ein Teil der Reinigungszinken (vorzugsweise alle) in einer Richtung beweglich gelagert ist, die parallel zu einem flächigen Abschnitte der Siebfläche des Siebrosts und senkrecht zur Bewegungsrichtung der Reinigungsharke verläuft, die diese während ihrer Bewegung entlang der Vorderseite des Siebrosts besitzt.

Eine derartige Bewegungsfreiheit hat den Vorteil, dass die Reinigungszinken sich an den Verlauf der Roststäbe anpassen können. Sind diese nicht ganz parallel zur Bewegungsrichtung der Reinigungsharke ausgerichtet, so können die Reinigungszinken dennoch den zwischen den Roststäben vorhandenen Freiräumen folgen, ohne dass es hierbei zu einem Verkanten der Reinigungszinken kommen würde.

Im Ergebnis sind die Reinigungszinken also einerseits in eine Förderrichtung und andererseits senkrecht hierzu beweglich gelagert, wobei es sich bei der Förderrichtung stets um die Richtung handelt, in der sich die Reinigungsharke während ihrer durch den Antrieb veranlassten Bewegung bewegt (die Förderrichtung muss also nicht geradlinig verlaufen).

Weitere Vorteile der Erfindung sind in den nachfolgenden Ausführungsbeispielen beschrieben. Es zeigen, jeweils schematisch:
- **Figur 1**: eine Seitenansicht einer Vorrichtung zur Entfernung von Siebgut aus Abwasser,
- **Figur 2**: eine Seitenansicht einer weiteren Vorrichtung zur Entfernung von Siebgut aus Abwasser,
- **Figur 3**: eine aus dem Stand der Technik bekannte Reinigungsharke im Eingriff mit einem Siebrost,
- **Figur 4**: eine erfindungsgemäß ausgebildete Reinigungsharke im Eingriff mit einem Siebrost, und
- **Figur 5**: eine weitere Ausführungsform einer erfindungsgemäß ausgebildeten Reinigungsharke im Eingriff mit einem Siebrost.

Vorab sei erwähnt, dass in Figuren, die mehrere gleichartige Bauteile oder Abschnitte (wie beispielsweise Reinigungszinken 7) zeigen, teilweise nur eines oder zwei von mehreren gleichartigen Bauteilen bzw. Abschnitten mit Bezugszeichen versehen ist, um eine gute Übersichtlichkeit zu gewährleisten.

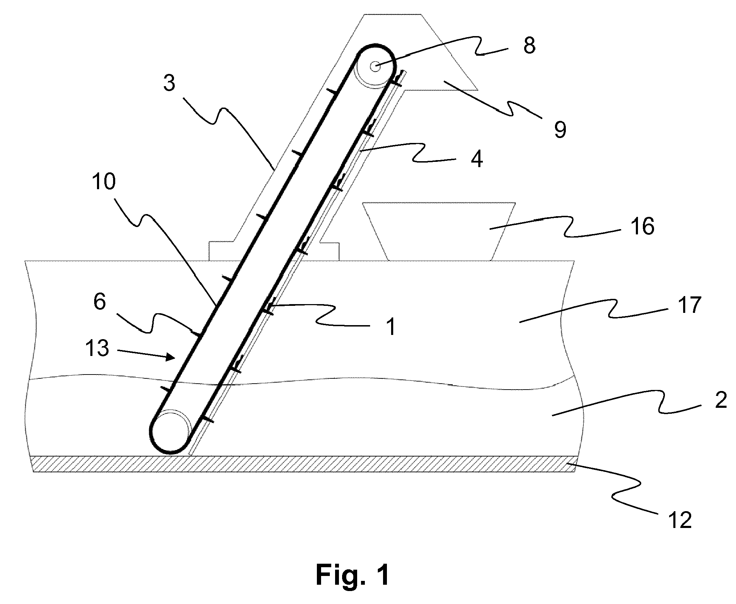

Figur 1 zeigt eine in einen Abwasserkanal 17 integrierte erfindungsgemäße Vorrichtung (Rechen) zum Abscheiden und Entfernen von Siebgut 1 (z. B. in Form von Steinen, Ästen, etc.). Die Vorrichtung weist einen schräg von oben in das Abwasser 2 hineinragenden Siebrost 4 auf, der durch nicht gezeigte Befestigungselemente mit einem Gestell 3 der Vorrichtung und bei Bedarf auch mit der Kanalsohle 12 des Abwasserkanals 17 verbunden ist.

Ferner weist die Vorrichtung zwei bezogen auf die Blattebene hintereinander angeordnete und voneinander beabstandete und mit Hilfe eines Antriebs 8 um den Siebrost 4 umlaufend bewegbare Zugorgane 10 (z. B. in Form von Umlaufketten) auf, die über mehrere dazwischenliegende Reinigungsharken 6 miteinander in Verbindung stehen (unter Umständen kann auch nur eine Reinigungsharke 6 ausreichend sein). Die Zugorgane 10 sind über seitliche Führungen in ihrer Bahn geführt, wobei die Führung im oberen und unteren Umlenkbereich, aber auch in den dazwischenliegenden Bereichen platziert sein kann, in denen die Zugorgane 10 parallel zueinander verlaufen.

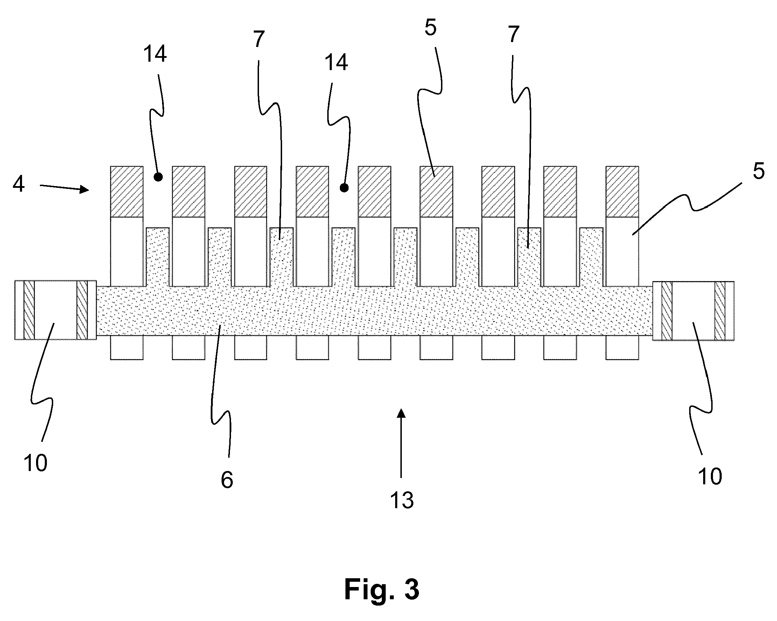

Die Reinigungsharke 6 umfasst wiederum eine Vielzahl von nebeneinander angeordneten Reinigungszinken 7, die in die Zwischenräume 14 des Siebrosts 4 eingreifen, wenn sich die Reinigungsharke 6 durch Antreiben der Zugorgane 10 in Förderrichtung (bezogen auf Figur 1 im Uhrzeigersinn) an der stromaufwärts gerichteten Vorderseite 13 des Siebrosts 4 vorbeistreicht (vergleiche auch Figuren 3 bis 5).

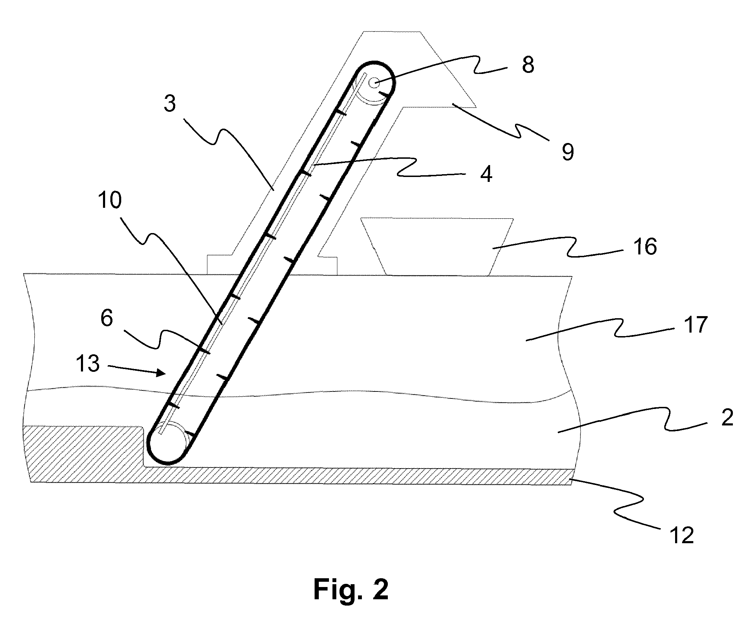

Das vom Siebrost 4 zurückgehaltene Siebgut 1 (die Abwasserströmung verläuft in den Figuren 1 und 2 von links nach rechts) wird schließlich von den Reinigungsharken 6 bzw. deren Reinigungszinken 7 erfasst und nach oben gefördert. Vor dem Passieren des oberen Wendepunkts gelangt es schließlich, eventuell über ein Leitblech, in den Bereich eines Austrags 9 und von dort nach außen, beispielsweise in einen Container 16. Die Reinigungsharke 6 wird schließlich wieder zum unteren Wendepunkte geführt, so dass der Kreislauf von vorne beginnen kann.

Aus dem Vergleich der Figuren 1 und 2 ergibt sich, dass die Bewegungsbahn der Reinigungsharken 6 nicht zwangsläufig vollständig vor dem Siebrost 4 (bezogen auf die Strömungsrichtung des Abwassers 2) verlaufen muss. Vielmehr ist auch eine in Figur 2 dargestellte Ausführung denkbar, in der die Reinigungsharken 6 den Siebrost 4 in der gezeigten Seitenansicht "umkreisen".

Wie nun Figur 3 (bekannter Stand der Technik) zeigt, war es bisher üblich, dass alle Reinigungszinken 7 einer Reinigungsharke 6 gleich tief in die zwischen den Roststäben 5 des Siebrosts 4 vorhandenen Zwischenräume 14 eingreifen. Jede Reinigungsharke 6 bewirkt in diesem Fall beim Passieren des Siebrosts 4 eine vollständige Reinigung der Zwischenräume 14, d. h. die vollständige Entfernung sämtlichen zurückgehaltenen Siebguts 1.

Im Gegensatz hierzu sieht die vorliegende Erfindung nun vor, dass die Vorrichtung eine oder mehrere Reinigungsharken 6 aufweist, wobei die Reinigungszinken 7 einer Reinigungsharke 6 unterschiedlich tief in die genannten Zwischenräume 14 des Siebrosts 4 eingreifen.

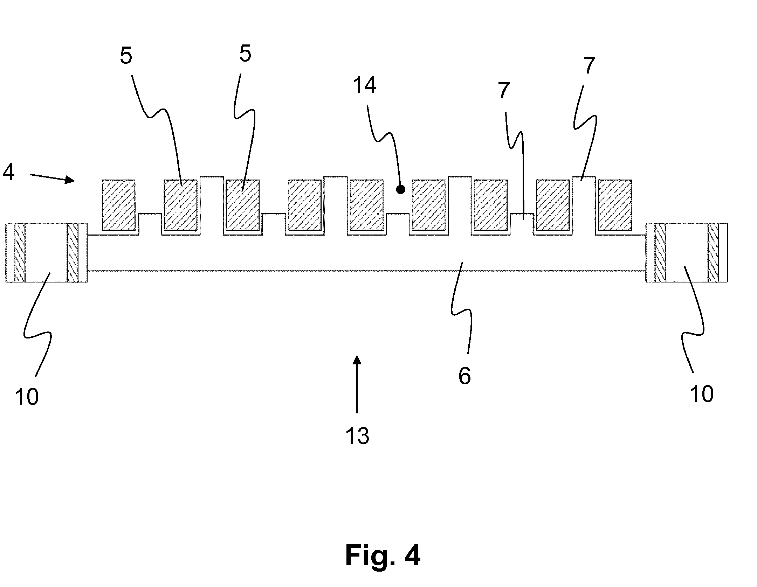

Eine mögliche Ausführungsform ist schematisch in Figur 4 dargestellt (wobei die Ansicht im Gegensatz zu Figur 3 so gewählt wurde, dass sie parallel zur Längserstreckung der Roststäbe 5 verläuft). Wie dieser Figur zu entnehmen ist, besitzen die Reinigungszinken 7 eine unterschiedliche Eingriffstiefe, d.h. sie erstrecken sich unterschiedlich weit in die zwischen den einzelnen Roststäben 5 vorhandenen Zwischenräume 14.

Der Vorteil dieser Lösung liegt in der Tatsache, dass die Belastung auf die jeweilige Reinigungsharke 6 geringer ist, als wenn alle Reinigungszinken 7 eine Länge L aufweisen, die ausreicht, um die Zwischenräume 14 vollständig von zurückgehaltenem Siebgut 1 zu befreien. Um auch im Fall der erfindungsgemäßen Lösung eine vollständige Reinigung des Siebrosts 4 zu ermöglichen, wäre es schließlich von Vorteil, dass die Vorrichtung wenigstens eine zweite Reinigungsharke 6 aufweist, wobei die längeren Reinigungszinken 7 der zweiten Reinigungsharke 6 derart platziert sein sollten, dass sie in diejenigen Zwischenräume 14 eingreifen, die von den kürzeren Reinigungszinken 7 der in Figur 4 gezeigten (ersten) Reinigungsharke 6 durchgriffen wurden. Hierdurch wird sichergestellt, dass sämtliche Zwischenräume 14 nach dem Passieren der beiden Reinigungsharken 6 einmal von einem kürzeren und einmal von einem längeren Reinigungszinken 7 durchkämmt wurden.

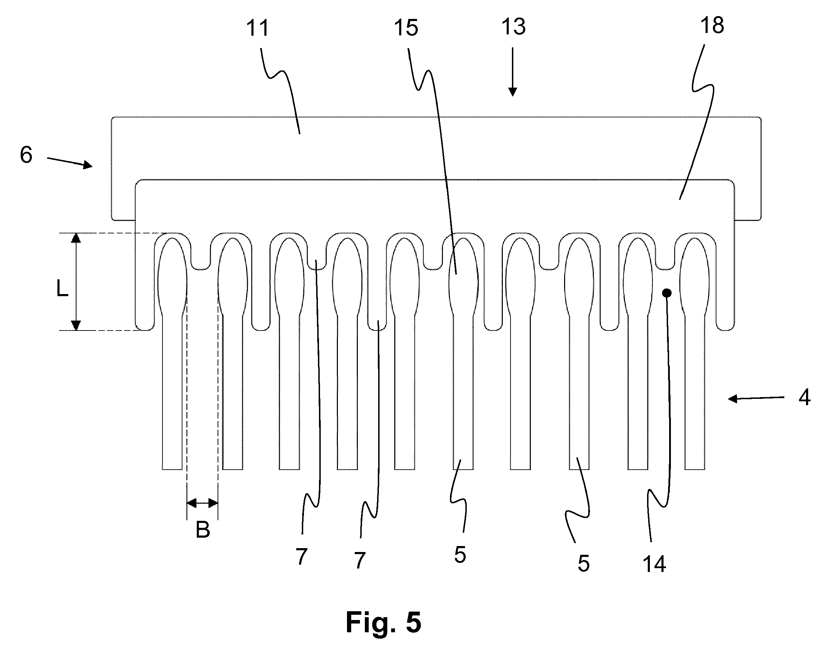

Eine weitere Ausführungsform einer erfindungsgemäßen Reinigungsharke 6 zeigt Figur 5. Im Gegensatz zu Figur 4 ist hier eine Lösung gezeigt, bei der keine der Reinigungszinken 7 den Siebrost 4 vollständig durchgreift. Dies ist auch nicht nötig, da die zu reinigende Siebfläche praktisch bei den gezeigten Verbreiterungen 15 der Roststäbe 5 endet, da die Verbreiterungen 15 die kleinste lichte Breite B zwischen den benachbarten Roststäben 5 und damit die Siebspaltbreite des Siebrosts 4 bestimmen. Mit anderen Worten ist es also ausreichend, wenn nur der Bereich von den entsprechenden Reinigungszinken 7 durchgriffen wird, der sich von der Vorderseite 13 des Siebrosts 4 bis zum Bereich der dicksten Verbreiterung 15 der Roststäbe 5 erstreckt. Die Länge L der längeren Reinigungszinken 7 sollte also einen Betrag aufweisen, der wenigstens dem kleinsten Abstand zwischen der Vorderseite 13 des Siebrosts 4 und der Stelle der dicksten Verbreiterung 15 der Roststäbe 5 entspricht.

Schließlich zeigt Figur 5 exemplarisch für alle möglichen Ausführungen, dass es von Vorteil sein kann, wenn die Reinigungszinken 7 Teil eines Zinkenkamms 18 sind, der wiederum auf einem separaten Träger 11 montiert ist, der schließlich mit den Zugorganen 10 in Verbindung steht.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

### Bezugszeichenliste

- 1: Siebgut
- 2: Abwasser
- 3: Gestell
- 4: Siebrost
- 5: Roststab
- 6: Reinigungsharke
- 7: Reinigungszinken
- 8: Antrieb
- 9: Austrag
- 10: Zugorgan
- 11: Träger
- 12: Kanalsohle
- 13: Vorderseite des Siebrostes
- 14: Zwischenraum zwischen zwei benachbarten Reinigungszinken
- 15: Verbreiterung des Roststabs
- 16: Container
- 17: Abwasserkanal
- 18: Zinkenkamm

- L: Länge eines Reinigungszinkens
- B: lichte Breite zwischen zwei benachbarten Reinigungszinken

## Patentansprüche

1. Vorrichtung zum Abscheiden und Entfernen von Siebgut (1) aus einer mit Siebgut (1) verunreinigten strömenden Flüssigkeit, beispielsweise Abwasser (2),
- wobei die Vorrichtung einen an einem Gestell (3) fixierten und eine Siebfläche bildenden Siebrost (4) aufweist,
- wobei der Siebrost (4) mehrere nebeneinander angeordnete und durch Zwischenräume (14) zumindest abschnittsweise voneinander beabstandete Roststäbe (5) aufweist,
- wobei der Siebrost (4) eine im Betrieb der Vorrichtung von der strömenden Flüssigkeit angeströmte Vorderseite (13) aufweist,
- wobei die Vorrichtung zumindest eine Reinigungsharke (6) mit einer Vielzahl von Reinigungszinken (7) umfasst, und
- wobei die Reinigungsharke (6) mit Hilfe eines Antriebs (8) derart entlang der Vorderseite (13) des Siebrosts (4) bewegbar ist, dass die Reinigungszinken (7) beim Passieren des Siebrosts (4) zumindest abschnittsweise in die genannten Zwischenräume (14) eingreifen, um vom Siebrost (4) zurückgehaltenes Siebgut (1) von diesem zu entfernen und in Richtung eines Austrags (9) der Vorrichtung zu fördern,
**dadurch gekennzeichnet,**
**dass** die Reinigungsharke (6) Reinigungszinken (7) aufweist, die unterschiedlich tief in die genannten Zwischenräume (14) des Siebrosts (4) eingreifen.

2. Vorrichtung gemäß dem vorangegangenen Anspruch, **dadurch gekennzeichnet, dass** die Vorrichtung wenigstens zwei Reinigungsharken (6) aufweist, die den Siebrost (4) beim Betrieb der Vorrichtung nacheinander passieren, wobei die Reinigungsharken (6) jeweils längere und kürzere Reinigungszinken (7) aufweisen, wobei die Reinigungszinken (7) der ersten Reinigungsharke (6) derart zu den Reinigungszinken (7) der zweiten Reinigungsharke (6) versetzt angeordnet sind, dass die einzelnen Zwischenräume (14) nacheinander sowohl von kürzeren als auch von längeren Reinigungszinken (7) durchkämmt werden.

3. Vorrichtung gemäß dem vorangegangenen Anspruch, **dadurch gekennzeichnet, dass** zumindest ein Teil der Reinigungszinken (7) in die Zwischenräume (14) eingreift, ohne hierbei den Siebrost (4) vollständig zu durchgreifen.

4. Vorrichtung gemäß einem der vorangegangenen Ansprüche, **dadurch gekennzeichnet, dass** die Roststäbe (5) im Bereich der Vorderseite (13) des Siebrosts (4) zumindest abschnittsweise in einer gemeinsamen Ebene enden.

5. Vorrichtung gemäß einem der vorangegangenen Ansprüche, **dadurch gekennzeichnet, dass** die Reinigungsharke (6) eine erste Art von Reinigungszinken (7) und wenigstens eine zweite Art von Reinigungszinken (7) aufweist, wobei gleichartige Reinigungszinken (7) gleich tief in die ihnen zugeordneten Zwischenräume (14) eingreifen.

6. Vorrichtung gemäß einem der vorangegangenen Ansprüche, **dadurch gekennzeichnet, dass** zueinander benachbarte Reinigungszinken (7) jeweils unterschiedlich tief in die ihnen zugeordneten Zwischenräume (14) eingreifen und/oder eine unterschiedliche Länge (L) aufweisen.

7. Vorrichtung gemäß einem der vorangegangenen Ansprüche, **dadurch gekennzeichnet, dass** ein erster Teil der Reinigungszinken (7) eine Länge (L) aufweist, deren Betrag wenigstens dem 1,2-fachen, bevorzugt wenigstens dem 1,5-fachen, besonders bevorzugt wenigstens dem 2-fachen, Betrag der Länge (L) eines weiteren Teils der Reinigungszinken (7) entspricht.

8. Vorrichtung gemäß einem der vorangegangenen Ansprüche, **dadurch gekennzeichnet, dass** ein erster Teil der Reinigungszinken (7) eine Länge (L) aufweist, deren Betrag maximal dem 3-fachen, bevorzugt maximal dem 4-fachen, besonders bevorzugt maximal dem 5-fachen, Betrag der Länge (L) eines weiteren Teils der Reinigungszinken (7) entspricht.

9. Vorrichtung gemäß einem der vorangegangenen Ansprüche, **dadurch gekennzeichnet, dass** die Roststäbe (5) im Bereich der genannten Vorderseite (13) des Siebrosts (4) Verbreiterungen (15) aufweisen, die die lichte Breite (B) der jeweiligen Zwischenräume (14) begrenzen, wobei sich nur ein Teil der Reinigungszinken (7) bis in den Bereich erstrecken, in dem der Betrag der durch die Verbreiterungen (15) begrenzten lichten Breite (B) der jeweiligen Zwischenräume (14) minimal ist.

10. Vorrichtung gemäß dem vorangegangenen Anspruch, **dadurch gekennzeichnet, dass** sich nur jeder zweite Reinigungszinken (7) bis in den Bereich erstreckt, in dem der Betrag der durch die Verbreiterungen (15) begrenzten lichten Breite (B) der jeweiligen Zwischenräume (14) minimal ist.

11. Vorrichtung gemäß einem der vorangegangenen Ansprüche, **dadurch gekennzeichnet, dass** die Reinigungszinken (7) und die Roststäbe (5) zumindest abschnittsweise in seitlicher Richtung relativ zueinander bewegbar sind.
